Europäisches Patentamt

European Patent Office

Office européen des brevets

(19)

(11) Veröffentlichungsnummer: **0 278 296 B1**

# (12) EUROPÄISCHE PATENTSCHRIFT

(45) Veröffentlichungstag der Patentschrift:
07.11.90

(21) Anmeldenummer: 88100985.6

(22) Anmeldetag: 23.01.88

(51) Int. Cl.⁵: **C02F 1/72**, C02F 3/12,
A62D 3/00, B09B 3/00,
C02F 3/00, C02F 3/26

(54) **Verfahren zur simultanen chemischen und biologischen Beseitigung fester und flüssiger organischer Abfälle und Vorrichtungen zur Durchführung dieses Verfahrens.**

(30) Priorität: 07.02.87 DE 3703824

(43) Veröffentlichungstag der Anmeldung:
17.08.88 Patentblatt 88/33

(45) Bekanntmachung des Hinweises auf die Patenterteilung:
07.11.90 Patentblatt 90/45

(84) Benannte Vertragsstaaten:
AT BE CH DE FR GB LI NL SE

(56) Entgegenhaltungen:
EP-A- 0 025 589
EP-A- 0 054 248
EP-A- 0 157 317
DE-A- 2 236 504
DE-A- 2 343 849
US-A- 4 440 645

GWF-WASSER/ABWASSER, Band 114, Nr. 4, April 1973,
Seiten 176-178; K.H. HUNKEN et al.: "Die intensive
Sauerstoffversorgung von Belebungsanlagen durch
Zugabe von Wasserstoffperoxid (H2O2)"

(73) Patentinhaber: **Dr. Karl Thomae GmbH, Postfach 1755,
D-7950 Biberach 1(DE)**

(72) Erfinder: **Kull, Alfred, Dipl.-Ing., Emmingergasse 6,
D-7950 Biberach 1(DE)**
Erfinder: **Mather, Matthias, Dr., Bachlangenstrasse 24,
D-7950 Biberach 1(DE)**
Erfinder: **Schmeiss, Hans-Joachim, Dipl.-Chem.,
Sonnenrain 4, D-7957 Schemmerhofen(DE)**

## Beschreibung

Die Erfindung betrifft ein Verfahren zur simultanen chemischen und biologischen Beseitigung fester und flüssiger organischer Abfälle und Vorrichtungen zur Durchführung dieses Verfahrens.

Reststoffe aus der chemischen Fertigung, chemische Abfallstoffe, die einem Recycling nicht mehr zugeführt werden können, aber auch manche, z. B. kontaminierte Hilfsstoffe in flüssiger oder fester Form werden im Rahmen der gehandhabten Abfallwirtschaft durch Deponie oder Verbrennung, in einigen Fällen auch durch Abwasserbehandlung beseitigt. Diese Beseitigungsformen sind aus heutiger Sicht oftmals nicht mehr ökologisch und ökonomisch vertretbar.

Die Beseitigung chemischer Abfallstoffe durch Belüftung von Bakterienkulturen ("Belebtschlammverfahren") in Abwasserbehandlungsanlagen stieß bisher immer sehr rasch an bestimmte Grenzen der Durchführbarkeit. Die seit Jahrzenten gebräuchlichen Anlagen mit Belebtschlamm erfordern flache, offene Becken, die viel Grundfläche und Volumen in Anspruch nehmen und welche, besonders bei einer Oberflächenbelüftung, eine Quelle für unliebsame Geruchsbelästigung darstellen (aerosolemission). Es wurde deshalb schon vor Jahren mit einigem Erfolg versucht, diese Situation durch den Bau von Klärtürmen zu verbessern, die mit einer besseren Belüftungstechnik versehen wurden. Die Klärtürme wurden nach außen abgeschlossen, die Luft feinblasig eingebracht, der darin enthaltende Sauerstoff durch eine längere Aufenthaltszeit und große Phasengrenzflächen besser absorbiert. Man nahm dabei an, daß eine hohe Effizienz bei der Sauerstoffaufnahme (in kg/KWh), verbunden mit einem minimierten Gasdurchsatz die Klärtürme gegenüber konventionellen Belebungsbecken überlegen macht. Der minimierte Gasdurchsatz verhindert eine zu große Schaumbildung und reduziert die Kosten der Abgasentsorgung. Ein großer Sauerstoffverbrauch sollte durch entsprechende Ausgestaltungen beispielsweise der Belüftungsanlage - hier war insbesondere der Gebrauch bestimmter Düsen vorgesehen - und des Reaktors - dieser sollte eine bestimmte Höhe der Flüssigkeitssäule aufweisen - erreicht werden.

Diese Reaktoren für die bakterielle Umwandlung organischer Substrate zu Klärschlamm, Wasser und Kohlenstoffdioxid (hingewiesen sei auf die "Turmbiologie" von Bayer AG und die "Biohoch-Reaktoren" von Hoechst AG, Biotechnology, Vol. 2, Verlag Chemie (1985), Tower-shaped Reactors by M. Zlokarnik) wurden in den letzten Jahren noch weiterentwickelt, da die Raum-Zeit-Ausbeute noch nicht befriedigte und zu große Absetzbecken für den Klärschlamm weiterhin nötig waren. Eine Weiterentwicklung in Form eines sogenannten Kompaktreaktors wird von E.A. Naundorf et al. in Chem. Eng. Process, 19 (1985), Seite 229-233 beschrieben. Es handelt sich dabei um einen Schlaufenreaktor in Form eines zylindrischen Behälters mit einem beidseitig offenen Leitrohr im Inneren und einem Höhendurchmesser-Verhältnis von ca. 7:1. An der Spitze des Behälters ist eine Zweistoff-düse angebrachten die in das zylindrische Leitrohr eintaucht. Die Luft wird durch den Innenhohlraum der Düse, die zu behandelnde Flüssigkeit durch den Hohlraum zwischen dem die Düse bildenden Zylinder und einem, diesen Zylinder umgebenden zweiten Zylinder zugeführt.

Es bildet sich dabei ein Flüssigkeitsstrahl in Form eines Hohlzylinders. Die Luft wird in das Innere dieses Hohlzylinders eingesaugt und in diesem verteilt, wobei durch Flüssigkeitszirkulation eine Verteilung der zirkulierenden Zwei-Phasen-Flüssigkeit unter Bildung sehr kleiner Blasen bewirkt und diese an der Außenseite des Sprühstrahls zirkulierende Zwei-Phasen-Komponente nach außen wieder abgegeben wird, wo sich das Gas wieder absondert. Sehr kleine Gasblasen bewirken eine gute Sauerstoffübertragung; ein Agglomerieren der Bakterien und Schwebestoffe wird durch die auftretenden Scherkräfte verhindert. Das im Leitrohr nach unten strömende Gemisch aus Abwasser, Luft und Bakterienmasse wird am Boden des Reaktors umgelenkt und bewegt sich im Außenrohr gleichmäßig nach oben. Am oberen Ende des Kernrohrs wird ein Teil dieses Gemisches durch die Sogwirkung der Zweistoffdüse in das Leitrohr zurückgesaugt. Der restliche Teil fließt aus dem Reaktor ab und wird entweder als Abwasserrückführung in den Reaktor wieder eingedüst oder einem Sedimentationsgefäß zugeführt. Im Sedimentationsgefäß wird dieser Teilstrom in gereinigtes Abwasser und Belebtmasse getrennt. Von der Belebtmasse wird der größere Teil im Kreislauf in den Reaktor zurückgeführt, während der Rest die Anlage als Bioschlamm verläßt. Nach Angaben der Autoren erreicht man mit einer solchen Anlage bei der biologischen Reinigung kommunaler und auch industrieller Abwässer (Papierfabrik, Brauerei) Raumbelastungen bis zu 28 kg CSB $m^{-3}d^{-1}$.

Die bisher bekannten biologischen Verfahren zur Reinigung industrieller Abwässer sind deshalb nicht für die Beseitigung einer Vielzahl von organischen Abfallprodukte einsetzbar, weil sie immer nur die biologisch direkt abbaubaren chemischen Stoffe erfassen während biologisch nicht direkt abbaubare chemische Stoffe unverändert die Anlage verlassen und weiterhin in Flüsse und Seen gelangen.

Es war deshalb das Ziel, ein Verfahren und eine dazu passende Anlage zu schaffen, die es gestatten, auch biologisch nicht direkt abbaubare chemische Stoffe zu entsorgen. Dieses Ziel wurde dadurch erreicht, daß die biologisch nicht abbaubaren Produkte durch chemische Oxidation bioverfügbar gemacht und die bioverfügbaren Produkte gleichzeitig biologisch abgebaut werden. Voraussetzung hierfür ist eine hohe Mikroorganismendichte im Reaktor, eine hohe Konzentration der abzubauenden Produkte, die als Lösung oder Suspension in Wasser vorliegen, was mit einer Minimierung der zugegebenen Wassermenge bis zu dem Punkt, an welchem noch tolerierbare osmotische Verhältnisse für die Mikroorganismen vorliegen, gleichbedeutend ist, eine Intensivbegasung mit hochkomprimierter Luft oder Sauerstoff bzw. Sauerstoff-Luftgemischen, und eine gleichzeitige Einleitung von Oxidationsmitteln, wobei eine intensive Durchmischung des Substrates mit Luft/Sauerstoff bei möglichst kurzer Kontaktzeit mit dem Oxidationsmittel wichtig ist. Nicht nur der chemische Streß sondern auch der mechanische Streß auf die Mikroorganismen ist dabei in von diesen tolerierten Grenzen zu halten.

Die geforderte hohe Wirkungsdichte bei der aeroben Fermentation wird nur erzielt, wenn in hohen Konzentrationsbereichen der Substratlösung bzw. -suspension die dazu erforderliche Luft oder Sauerstoff bzw. Luft-Sauerstoffgemische eingepumpt oder eingedüst werden unter gleichzeitiger Zugabe eines flüssigen oder gasförmigen Oxidationsmittels. Mit anderen Worten: es sind große Frachten auf kleinstem Raum zu verarbeiten, was den Einsatz sehr hoher, gleichbleibender Begasungsraten bedingt. Die ständige Bereitstellung dieser hohen Begasungsraten läßt sich aber nur mittels spezieller Düsen erreichen.

Ein Verfahren, welches die vorgenannten Kriterien berücksichtigt - insbesondere die Reduktion der Wassermenge auf das geringst mögliche Volumen, gleichzeitige chemische Oxidation und biologischer Abbau als sogenannte Eintopfreaktion, Intensivbegasung mit hochkomprimierter Luft bzw. Luft-Sauerstoffgemischen, kurze Kontaktzeit mit dem Oxidationsmittel, Reduktion der durch die Düse bewirkten Scherkräfte -, erlaubt die rasche Entsorgung von in flüssiger oder suspendierter Form vorliegenden Abfällen, welche entweder nur biologisch abbaubare Substanzen oder auch Substanzen, die erst durch chemische Oxidation bioverfügbar gemacht werden können, enthalten. Ein derart gekennzeichnetes Verfahren ist ein Gegenstand der Erfindung.

Dieses Verfahren ist grundsätzlich anwendbar für organisch höchstbelastete Abwässer, organische Suspensionen, lösliche oder suspendierte feste organische Abfälle, welche biologisch abbaubare Substanzen enthalten oder Substanzen, die durch chemische Oxidation bioverfügbar gemacht werden können.

Ein weiterer Gegenstand der Erfindung ist ein Reaktor, der die gleichzeitige Durchführung von chemischer und biologischer Behandlung gestattet. Zur oxidativen Behandlung dienen flüssige oder gasförmige Oxidationsmittel bzw. Oxidationsmittelzubereitungen. Der Reaktor ist so beschaffen, daß er gleichzeitig die Oxidationsmittelzugabe, die Luft- bzw. Sauerstoffzufuhr, die Intensivdurchmischung der Medien bzw. des Reaktorinhalts erlaubt.

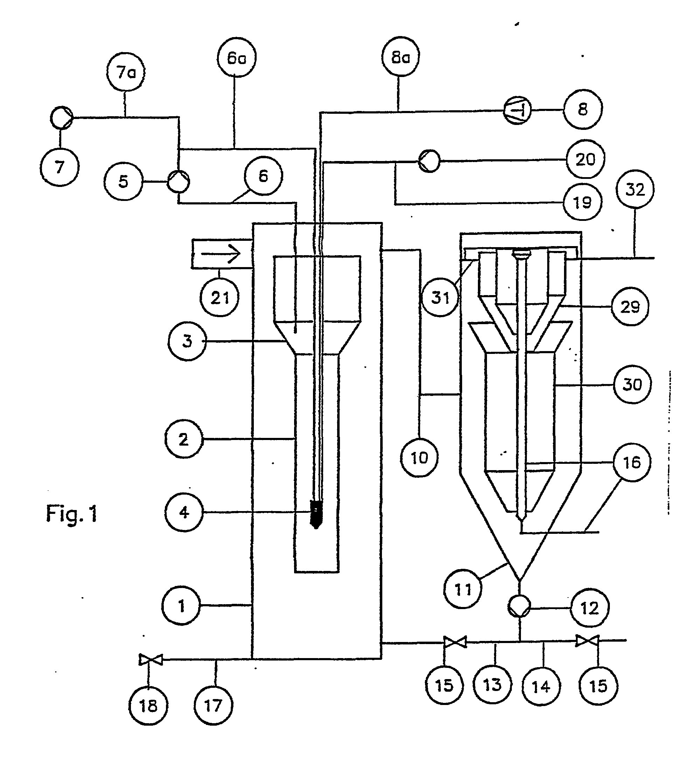

Der erfindungsgemäße Reaktor ist ein sogenannter Schlaufenreaktor in kompakter Bauweise. Zum besseren Verständnis des Aufbaus des Reaktors wird auf die Figur 1 verwiesen. Der Reaktor besteht aus einem Zylinder (1), dessen Höhe vorzugsweise das 3,3- bis 8-fache seines Durchmessers beträgt. Der Durchmesser selbst liegt bei einer vorzugsweisen Ausführungsform bei 0,5 bis 1 m. In dem Zylinder (1) ist zentrisch zu diesem ein nach beiden Seiten offenes Leitrohr (2), das am oberen Ende einen konisch nach außen verlaufenden, an seinem oberen Ende zylindrischen Deflektor (3) aufweist, untergebracht. Im unteren Drittel des Leitrohres (2) ist zentrisch zu diesem eine Düse (4) angebracht. An dieser Düse münden ein Rohr für die Kreislaufflüssigkeit (6a), ein Rohr für die Gaszufuhr (Luft oder Luft-Sauerstoffgemische) (8a) und ein Rohr für die Zufuhr des Oxidationsmittels (19). Im oberen oder mittleren Bereich des Inneren des Leitrohres (2) beginnt ein Rohr (6) zur Kreislaufführung des Substrats; dieses Rohr (6) ist über eine Rückführpumpe (5) mit dem Rohr (6a) der Flüssigkeitszufuhr zu der Düse (4) verbunden; an diesem Rohr (6a) liegt aber auch hinter der Pumpe (5) die Substratzufuhrleitung (7a) an, welche über eine Dosierpumpe (7) verfügt. Über die Pumpe (5) wird die Fermentationslösung bzw. -suspension durch die Düse (4) im Kreis gepumpt. In diese Kreisleitung wird auch neues Substrat über die Dosierpumpe (7) zudosiert. Die Pumpe (5), die Dosierpumpe (7) und der Kompressor (8) sind aufeinander abstimmbar. Eine solche Abstimmung dient einer optimalen Anpassung der Betriebsführung an die Beschaffenheit des Substrats.

Über den Kompressor (8) wird das Gas (Luft oder Luft-Sauerstoffgemisch) durch die Leitung (8a) in die Düse (4) gepreßt. An der Leitung (19) liegt eine Dosierpumpe oder ein Drosselventil (20) zur Dosierung der Zugabe des Oxidationsmittels, gegebenenfalls auch eines, als Katalysator für die Oxidation dienenden Mittels. Diese Mittel werden in dosierter Form eingepumpt oder eingesaugt. Eine Überlaufleitung (10), deren Positionierung gleichzeitig das Flüssigkeitsniveau im Reaktor bestimmt, ist mit einem statischen Abscheider (11) verbunden. Außerhalb eines Ringraums oder einer durch Leitbleche geschaffenen Beruhigungszone (30) im Abscheider (11) steigen etwaig mitgerissene Luftblasen auf. Ein Teil der zu klärenden Flüssigkeit gelangt direkt zur Pumpe (12), ein anderer Teil steigt aber nach oben. Aufge stiegene Schlammteilchen werden mittels Umlenkelementen (29), vorzugsweise über ein System konzentrischer Ringkanäle mehrfach abgelenkt, wobei ihre Tendenz zum Absinken verstärkt wird. Das geklärte Abwasser fließt durch die Leitung (16) ab. Im Inneren des Rohrs (30) sinken die Teilchen zum konischen Boden ab. Etwaig auftretender Schwimmschlamm wird über eine Überlaufkante in die Auffangzone (31) geleitet, von wo er über das Rohr (32) abfließt. Die Umlenkelemente (29) stehen mit dem Ablauf (16) über das Flüssigkeitsniveau in loser Verbindung, das schlammhaltige Abwasser wird durch die Umlenkelemente (29) mehrfach umgelenkt, wobei sich dadurch der Sedimentationsweg verlängert. Die Umlenkelemente (29) sind über der Beruhigungszone (30) so angeordnet, daß abgeschiedene Schlammteilchen im Inneren dieser Zone nach unten sinken können, um dann durch die Pumpe (12) ausgetragen zu werden. Der Abscheider (11) ist, zum Transport des eingedickten Schlammes über eine Pumpe (12) sowohl mittels der Leitung (13) mit dem Reaktor als auch mittels der Leitung (14) mit einem Auffangbecken zur Aufnahme des Überschuß-schlammes verbunden. In den Leitungen (13) und (14) sind zur Einregulierung des Rücklaufverhältnisses Ventile (15) eingebaut.

Bedingt durch den tiefgesetzten Einbau der Düse (4) am unteren Ende des Leitrohres (2) im unteren Drittel des Reaktors wird eine gezielte Umkehrung des Düsenstrahls am Boden des Reaktors erreicht. Die nach der Umkehrung des Düsenstrahls frei werdenden kleinen Gasblasen strömen an der Außenseite des Leitrohres entlang nach oben. Über die Leitung (17) und das Absperrorgan (18) wird der Reaktor entleert. Im Kopfbereich des Reaktors befindet sich eine Eintragvorrichtung (21), z. B. in Form einer Förderschnecke, zur alternativen Beschickung des Reaktors mit Trocksubstrat. In diesem Fall wird über die Leitung (7a) nur Wasser zudosiert.

Die Düse (4) ermöglicht eine intensive Sauerstoffversorgung des Reaktors bei einer minimalen mechanischen Belastung (z. B. durch auftretende Scherkräfte) der Mikroorganismen.

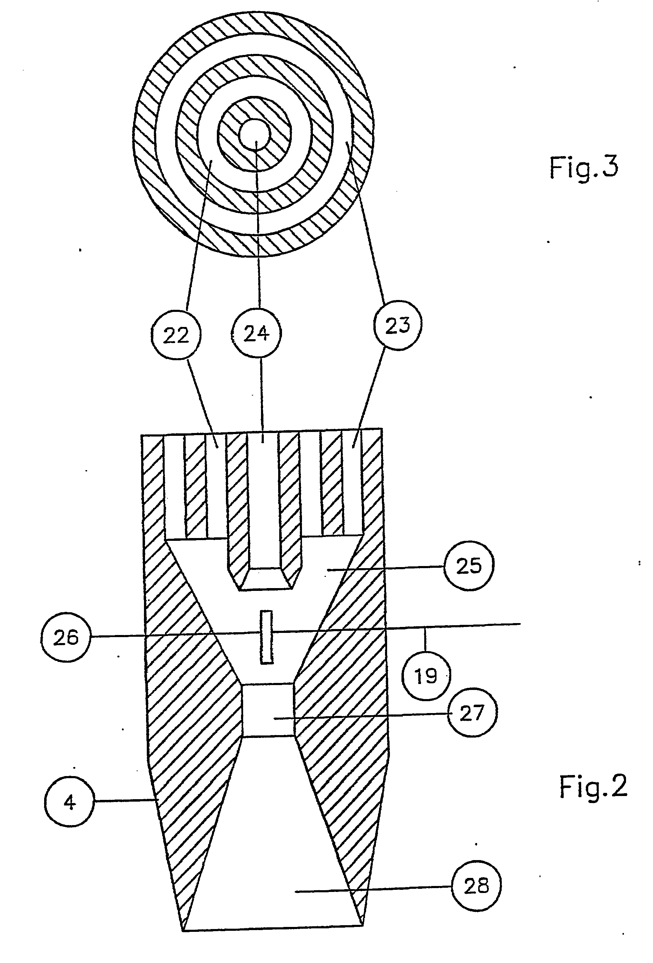

Die Figuren 2 und 3 zeigen den hierzu erforderlichen Aufbau einer solchen Düse. Die Figur 2 stellt einen Längsschnitt der gesamten Düse, die Figur 3 einen Querschnitt derselben im oberen Bereich dar. Am oberen Ende der Düse befinden sich Ringspalte (22) und (23) zur gezielten Zuführung sowohl des zu reinigenden Substrates als auch zur Zuführung der Luft oder eines Luft-Sauerstoffgemisches. Der Ringspalt (22) dient der Zuführung der Luft, der äußere Ringspalt (23) und die Zentralbohrung (24) dienen der Zuführung des Substrates. Die Ringspalte (22) und (23) und die Zentralbohrung (24) münden in eine Vormischkammer (25). Im Bereich des Ausgangs der Vormischkammer liegt eine Düse (26), die mit dem Zuleitungsrohr für das Oxidationsmittel (19) verbunden ist. Kurz nach der Düse (26) geht die Vormischkammer (25) in die Mischkammer (27) über. Der Durchmesser der Mischkammer (27) ist so ausgelegt, daß durch das Erreichen niedriger Flüssigkeitsgeschwindigkeiten die auf die Mikroorganismen wirkenden Scherkräfte so gering als möglich gehalten werden. Der Durchmesser der Mischkammer (27) wird so gewählt, daß Flüssigkeitsgeschwindigkeiten von 0,4 bis 5 m sec$^{-1}$ erreicht werden. An die Mischkammer (27) schließt sich dann die trichterförmige Ausgangsöffnung (28) der Düse (4), auch Diffusor genannt, an.

Dadurch daß die Luft bzw. ein Luft-Sauerstoffgemisch durch den Ringspalt (22), das Substrat (Flüssigkeit bzw. Suspension) durch die Zentralbohrung (24) und den Ringspalt (23) geführt werden, wird erreicht, daß die Luft zwischen zwei in sich gerundeten Flüssigkeitssäulen konzentrisch eingeschlossen wird. Damit findet in der Vorkammer (25) eine intensive Vermischung der beiden Medien statt, die zu einem extreme hohen Sauerstoffübergang führt. Wichtig ist aber auch, daß durch diese Anordnung ein hoher Stoffübergang bei nicht allzu hoher Turbulenz stattfindet. Hierzu ist es vorteilhaft, wenn erstens die Flächen der Zentralbohrung (24) und die des äußeren Ringspalts (23) möglichst gleich sind und zweitens das Verhältnis der Weite des Ringspalts (22) zu der Weite bzw. Querschnitt der Zentralbohrung (24) kleiner als 0,5 ist. Die kurz vor der Mischkammer (27) liegende Düse (26) sprüht Oxidationsmittel in die vermischten Medien; damit wird einerseits eine intensive Berührung der dortigen Medien mit dem Oxidationsmittel, andererseits aber, bedingt durch die tiefliegende Positionierung der Düse (26), eine nur sehr kleine Kontaktzeit der Medien mit dem Oxidationsmittel erreicht. Die kombinierte Belastung durch den ausgeübten mechanischen und chemischen Streß auf die Mikroorganismen wird durch diese oben genannten Maßnahmen in einem für die Mikroorganismen noch tolerierten Bereich gehalten. Die Positionierung der Düse im unteren Drittel des Reaktors ermöglicht es auch bei dem sehr hohen Schlammgehalt im Reaktor eine gute Auf- und Durchwirbelung des Reaktorinhalts zu erreichen.

Als Oxidationsmittel können gasförmige Stoffe, wie Ozon bzw. ozonhaltige Luft oder ozonhaltige sonstige Gase, als flüssige Oxidationsmittel Wasserstoffperoxid, lösliche anorganische oder organische Peroxide, beispielsweise Peroxisäuren, wie Perbenzoesäure, Peressigsäure, Perbuttersäure oder sonstige aliphatische oder aromatische Persäuren eingesetzt werden, aber auch Gemische organischer Säuren, wie Essigsäure, mit Wasserstoffperoxid oder anorganischer Säuren, wie Schwefelsäure mit Wasserstoffperoxid, gegebenenfalls auch in Anwesenheit katalytisch wirkender Schwermetallsalze, wie Fe(II)-Salze.

Der chemische und biologische Klärvorgang verläuft wie folgt:

Durch die Dosierpumpe (7) wird das Substrat (Lösung oder Suspension in Wasser) über die Leitung (7a) und die Ringleitung (6) dem Reaktor zugeführt, bis dieser bis zu der Höhe, an der die Überlaufleitung (10) positioniert ist, gefüllt ist. Durch die Pumpe (5) wird, in Abhängigkeit von ihrer Pumpleistung, über das Rohrsystem (6) und (6a) das Substrat-Belebtschlammgemisch im Kreis geführt. Die Leistung der Pumpe (5) wird so bemessen, daß ein möglichst hoher Rei nigungseffekt erzielt wird. Mit Hilfe des Kompressors (8) wird z. B. Luft angesaugt und durch den Ringspalt (22) der Düse (4) gepreßt. Die Pumpe (5) erzeugt über die Leitung (6a) und den Ringspalt (23) bzw. Zentralbohrung (24) der Düse (4) eine für den intensiven Stoffaustausch in der Vorkammer (25) erforderliche engste Kontaktierung der Medien Substrat-Belebtschlammgemisch und Luft oder Luft-Sauerstoff gemisch, indem die Luft oder dieses Gemisch von allen Seiten durch das Substrat-Belebtschlammgemisch eingehüllt wird und sich intensiv in der Vorkammer mit dem Substrat mischt. Gleichzeitig wird durch die Düse (26) das Oxidationsmittel eindosiert. Nach einer sehr kurzen Verweilzeit in der eigentlichen Mischkammer (27) trifft dieses Gemisch unter Aus bildung eines Düsenstrahls auf den Boden des Reaktors, wo der Düsenstrahl umgeleitet wird und in dem Raum zwischen den die Aussenwandungen die Düse (4) enthaltenden Leitrohres (2) und der Innenwandung des Reaktors (1) nach oben strömt. Über den Abscheider (11) wird, mittels Pumpe (12) und Ventile (15) ein optimales Rücklaufverhältnis eingestellt. Nach einer gewissen Verweilzeit im Reaktor, die von außen durch die Einstellung der Pumpleistungen der Pumpen (5) und (7), der Leistung des Kompressors (8), der Dosierungseinrichtung (20) für das Oxidationsmittel und des Rücklaufverhältnisses im Abscheiderkreislauf manipulierbar ist, wird ein Teil der geklärten Flüssigkeit über den Ablauf (16) und ein Teil des Aktivschlammes über den Ablauf (14) abgeführt; diese Mengen werden dann durch Zupumpen neuen Substrats über die Pumpe (7) wieder ersetzt.

Der Abscheider (11) wird so betrieben, daß die Menge, die über die Leitung (13) und das Ventil (15) fließt, größer ist als die Menge der geklärten Flüssigkeit, die über die Leitung (16) abgeführt wird. Die Abscheidung der Schlammteilchen erfolgt im Innern der Beruhigungszonen (30) und (29), wo die für die Sedimentation nötige Turbulenzarmut herrscht. Das Volumen des Abscheiders (11) liegt in der selben Größenordnung wie das des Reaktors (1).

Im allgemeinen stellt sich im Inneren des Reaktors von selbst die erforderliche Betriebstemperatur ein. Es ist aber vorteilhaft, wenn diese Temperatur noch von außen geregelt werden kann, da Temperaturen über 60°C und unter 20°C nicht auftreten sollten.

Die Leistungsfähigkeit des erfindungsgemäßen Reaktors kann

a.) durch den CSB-Wert (= chemischer Sauerstoffbedarf, gegeben durch die Menge Sauerstoff, die notwendig ist, um bei der Oxidation mit Chromschwefelsäure in einem Substrat vorhandene organische Materie vollständig in $CO_2$ und $H_2O$ zu oxidieren),

b.) durch Angaben über die Raumbelastung (= kg CSB Zulauf pro Reaktorvolumen) und

c.) den TS-Wert (der TS-Wert gibt in Gramm die Trockensubstanz pro Liter Substrat-Belebtschlammgemisch an) wie folgt angegeben werden:

Der CSB-Wert erreicht Größen bis zu 1 000 000 mg CSB/Liter; im Vergleich hierzu liegt er bei kommunalen Abwässern im Zulauf bei 400-800 mg Csb/liter, bei industriellen Abwässern bei 2000 bis 10 000 mg CSB/Liter.

Die Raumbelastung bezüglich CSB beträgt bei dem erfindungsgemäßen Reaktor bis zu ca. 80 g/liter, im Vergleich hierzu bei kommunalen Anlagen bis 0,5 g/liter, bei industriellen Anlagen bis 1,5 g/liter (diese Werte hängen auch von der Salzbelastung ab). Die Abbauleistung liegt bei ca. 60-80 kg CSB $m^{-3}d^{-1}$.

Die Leistung an Trockensubstanz TS liegt in Abhängigkeit von der Dimensionierung des Eindickers und der Substratzulaufkonzentration bei dem erfindungsgemäßen Reaktor zwischen 5 und 180 g $TS\cdot L^{-1}$, die Obergrenze wird erreicht, wenn der Schlamm so dick wird, daß er sich nicht mehr ausreichend fluidisieren oder abscheiden läßt (im Vergleich hierzu bei kommunalen Anlagen bei 3 bis 8 g $TS\cdot L^{-1}$).

Ein weiterer Vorteil des erfindungsgemäßen Reaktors liegt in seinem geringen Platzbedarf; dieser geringe Platzbedarf gestattet sogar die Unterbringung der gesamten Anlage auf einem Lastkraftwagen und gewährleistet dabei eine bisher nicht dagewesene Mobilität der Kläranlage.

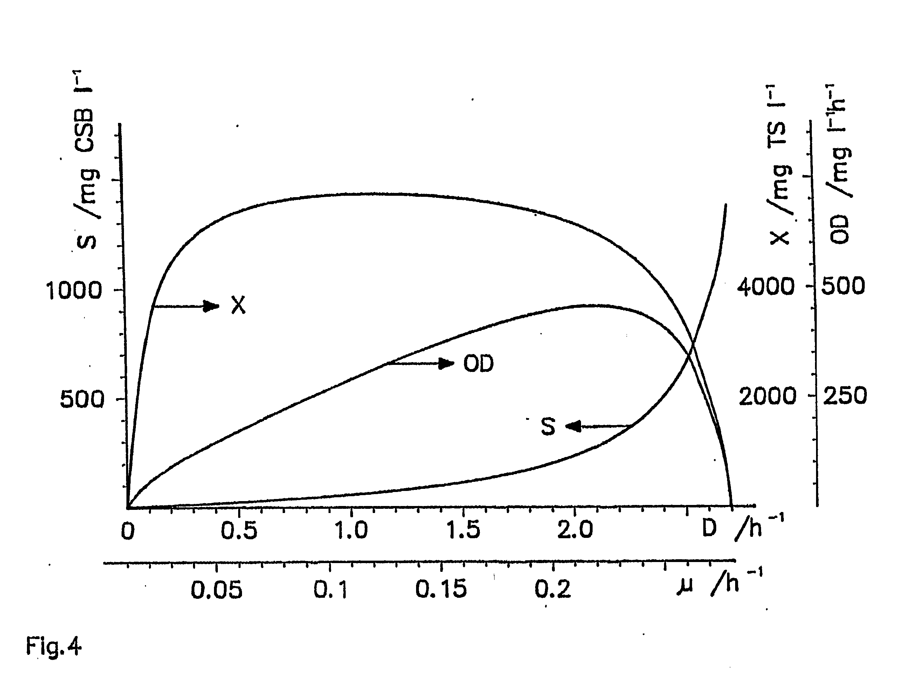

Zum Verständnis des Einsatzbereichs des Reaktors zeigt Figur 4 ein Gleichgewichtsdiagramm der aeroben Abwasserbehandlung, dem die Angaben von Wiesmann (U. Wiesmann, Kinetik der aeroben Abwasserreinigung durch Abbau von organischen Verbindungen und durch Nitrifikation, VDI Berichte Nr. 607, 1986, Seite 1597-1624) zugrunde liegen. Es bedeuten: X die Konzentration an aktiver Biomasse (mg $TS\cdot L^{-1}$), S die Konzentration an Substrat (mg $\cdot L^{-1}$), wobei als Substrat der biologisch verwertbare Anteil des CSB angesehen wird, OD die Sauerstoffaufnahmerate der Organismen ($mg\cdot L^{-1}\cdot h^{-1}$), D ist die spezifische Durchflußrate (kehrwert der Verweilzeit, in der Klärtechnik auch als Schlammalter bezeichnet) und µ die spezifische Wachstumsrate der Organismen. Beide Größen haben die Einheit $h^{-1}$. Für die Berechnung wurde angenommen, daß mit Hilfe des Abscheiders die Biomasse im Reaktor um das Zehnfache gesteigert wurde gegenüber dem Betrieb ohne Abscheider. Die Zulaufkonzentration für das Substrat für dieses Beispiel war 1375 mg $CSB\cdot L^{-1}$.

Insbesondere hingewiesen sei auf den Verlauf der Substrat konzentration im Reaktor (Kurve S). Im "klassischen" Belebungsbecken werden Ablaufwerte von z. B. 10 mg $CSB\cdot L^{-1}$ angestrebt, wenn nur der biologisch überhaupt abbaubare CSB betrachtet wird. Demnach sind Durchflußraten von D < 0,05 $h^{-1}$ einzustellen, was einer Verweilzeit von 20 h entspricht. Dagegen arbeitet der erfindungsgemäße Reaktor bei Durchflußra ten von bis zu 2 $h^{-1}$, also Verweilzeiten von 0,5 h. Der Ablaufwert des Substrats liegt hier etwa bei 300 mg $CSB\cdot L^{-1}$ (wobei wieder nur der biologisch abbaubare CSB gemeint ist). Es ist also nicht möglich, mit diesem Reaktor die Ablaufwerte einer "klassischen" Biologie zu erreichen. Dies wurde auch nicht angestrebt. Notwendig für den Betrieb der chemischen Oxidation mit für die Organismen schädlichen Oxidationsmitteln ist ein rasches Nachwachsen der Organismen, das allein das Überleben der aktiven Biomasse im Reaktor sicherstellt. Das rascheste Wachstum ist aber nur bei hohen Werten der Durchflußrate möglich. In Figur 4 ist die zu einer bestimmten Durchflußrate äquivalente spezifische Wachstumsrate µ angegeben, um diesen Sachverhalt auch größenordnungsmäßig klarzustellen. Das rasche Wachstum der Organismen macht nun unbedingt eine effektive Begasung nötig, die eine Sauer stofflimitierung des Wachstums verhindern muß.

Das aus dieser Anlage ablaufende Abwasser (Rohrleitung 16) muß also einer zweiten Belebungsstufe zugeführt werden, wo dann der Abbau auf die erforderliche Reinheit bei langen Verweilzeiten erfolgt.

Hieraus ergibt sich die Möglichkeit, in dieser zweiten Stufe nicht nur Organismen zu selektionieren, die sich auf die verbliebenen Substrate besser spezialisieren können, sondern auch die Nitriflkation in dieser Stufe zu fördern oder überhaupt erst zu ermöglichen, indem die aus dem erfindungsgemäßen Reaktor austretende Begasungsluft zur Belüftung der zweiten Stufe verwendet wird, und das in ihr enthaltene $CO_2$ als Kohlenstoffquelle der nitrifizierenden Organismen dient.

Das erfindungsgemäße Verfahren hat gegenüber den konventionellen Verfahren zwei wesentliche Vorteile:

1. es gestattet die Beseitung ansonsten schwerabbaubarer Substanzen durch chemische Oxidation im biologischen Reaktor und

2. bei einer Nachreinigung des Auslaufes (16) in einer 2. Stufe auf sehr niedrige Ablaufwerte kann gegenüber dem konventionellen einstufigen Verfahren 30 bis 40 % der Begasungsluft gespart werden.

Das folgende Beispiel zeigt eine durchgeführte Biolyse fester, staubförmiger Reststoffe aus der Pharmaproduktion und die dabei erzielten Ergebnisse.

Beispiel

Reststoffe aus der Pharmaproduktion, die hauptsächlich aus Zuckern, Carboxymethylcellulose und anderen Hilfsstoffen neben 10 % biologisch direkt nicht abbaubaren Bestandteilen, wie Wirkstoffen, bestanden, wurden in einem erfindungsgemässen Reaktor mit einem Durchmesser von 500 mm und einer Höhe von 2300 mm eingetragen. Der Flüssigkeitsinhalt betrug 500 1. Die Reststoffe wurden in Wasser angemaischt, in einem Verhältnis von 500 g pro 1 l Wasser. Der CSB der Maische betrug 500 kg/m³. Als Inoculum wurde Schlamm aus einer bestehenden industriellen Abwasserbehandlungsanlage verwendet. Der Reaktor wurde mit einer Raumbelastung von 25 kg CSB m⁻³·d⁻¹ gefahren. Die Rezirkulation der Fermenterbrühe durch die Düse betrug 12 m³/h, begast wurde mit 20 m³/h Luft. Es stellte sich ein pH-Wert von 6,5 ein, der gelöste Sauerstoff in der Fermentationsbrühe lag bei 2,0 mg/l, die Temperatur bei 38°C. Der Ablauf hatte noch einen CSB von 2 g/l, konnte also problemlos einer industriellen Abwasserbehandlungsanlage aufgegeben werden. Die organische Trockensubstanz im Reaktor lag bei 40 g/l; die benötigte Leistung war insgesamt 3,4 Kw/m³.

Die chemische Oxidation wurde durchgeführt, indem 67 ml/h Perhydrol der Düse aufgegeben wurden.

Der Abbaugrad bezüglich CSB ohne Zugabe von Perhydrol betrug 89,7 % der mit Perhydrol 99,6 %. Dieses Ergebnis zeigt deutlich, daß praktisch alle biologisch direkt nicht abbaubaren Bestandteile erfaßt wurden.

**Patentansprüche**

1.) Verfahren zur simultanen chemischen und biologischen Beseitigung fester und flüssiger organischer Abfälle, dadurch gekennzeichnet, daß die biologisch nicht abbaubaren Produkte durch Oxidation bioverfügbar gemacht und die bioverfügbaren Produkte gleichzeitig biologisch abgebaut werden, unter Einhaltung einer hohen Mikroorganismendichte im Reaktor, einer hohen Konzentration der abzubauenden Produkte, die als Lösung oder Suspension in Wasser vorliegen, einer Intensivbegasung mit Luft oder Luft-Sauerstoffgemischen und unter gleichzeitiger Zugabe eines Oxidationsmittels, wobei eine intensive Durchmischung des Substrats mit Luft oder Luft-Sauerstoffgemischen bei einer kurzen Kontaktzeit mit dem Oxidationsmittel erforderlich ist.

2.) Verfahren zur Nachreinigung des Abwassers, welches nach dem Verfahren gemäß Anspruch 1 anfällt, dadurch gekennzeichnet, daß dieses Abwasser einer klassichen Belebungsanlage zugeführt wird, diese Anlage aber mit der CO₂-haltigen Abluft, die beim Verfahren gemäß Anspruch 1 im Reaktor entsteht, begast wird, gegebenenfalls unter Zumischung weiterer CO₂-Mengen.

3.) Verfahren nach Anspruch 1, dadurch gekennzeichnet, daß im Inneren des Reaktors eine Temperatur zwischen 20 und 60°C eingestellt, der chemische Sauerstoffbedarf als CSB-Wert bis zu 1 000 000 mg CSB/Liter, die Raumbelastung bezüglich CSB bis zu 80 g CSB/Liter eingestellt wird.

4.) Verfahren nach Anspruch 1, dadurch gekennzeichnet, daß als Inoculum der Schlamm einer bestehenden Abwasserbehandlungsanlage verwendet wird.

5.) Verfahren gemäß den Ansprüchen 1, 3 und 4, dadurch gekennzeichnet, daß in einem Reaktor (1) durch eine Dosierpumpe (7) in Wasser gelöstes oder suspendiertes Substrat zugeführt und dort durch eine Pumpe (5) über eine Düse (4) im Kreis geführt wird, die Luft durch einen Ringspalt (22) der Düse (4) und das Substrat durch einen Ringspalt (23) und eine Zentralbohrung (24) der Düse (4) so geleitet wird, daß die Luft zwischen zwei in sich gerundeten Flüssigkeitssäulen zur Erzielung einer engen Kontaktierung dieser Medien in der Vorkammer (25) eingeschlossen, kurz vor dem Übergang der Vorkammer (25) in die Mischkammer (27) über eine dort liegende Düse (26) das Oxidationsmittel eingetragen wird und die Mischkammer (27) so gestaltet ist, daß sie zur Erreichung einer kurzen Kontaktzeit mit dem Oxidationsmittel eine Flüssigkeitsgeschwindigkeit von 0,4 bis 5 m sec⁻¹ zuläßt, wobei die Düse (4) im unteren Teil eines nach beiden Seiten offenen Leitrohres (2) untergebracht ist, so daß das Substrat-Luft-Gemisch nach Verlassen der Düse als Düsenstrahl am Boden des Reaktors umgeleitet wird und hernach zwischen Reaktorinnenwandung und Leitrohraußenwandung nach oben strömt und ein Teil des so behandelten Mediums laufend einem Abscheider (11) zur Trennung von Schlamm und Flüssigkeit zugeführt wird, der einen Teil des Schlammes wieder in den Reaktorkreislauf zurückführt.

6.) Verfahren nach Anspruch 5, dadurch gekennzeichnet, daß der Ablauf (10) des Reaktors (1) einem Abscheider (11) zugeführt wird, dessen Volumen in der Größenordnung des Reaktorvolumens liegt, wobei die Abscheidung durch strömungsberuhigende und die Begasung fördernde Einbauten, bestehend aus einem Ringraum (30) in Verbindung mit Umlenkelementen (29) bewirkt wird.

7.) Verfahren nach Anspruch 1, gekennzeichnet durch die Verwendung von Ozon, ozonhaltiger Luft oder von Wasserstoffperoxid, löslichen anorganischen oder organischen Peroxiden, vorzugsweise Peressigsäure oder von Essigsäure/Wasserstoffperoxidgemischen, gegebenenfalls in Anwesenheit von Katalysatoren, als Oxidationsmittel.

8.) Vorrichtung zur simultanen chemischen und biologischen Beseitigung fester und flüssiger organischer Abfälle mittels eines Schlaufenreaktors, bestehend aus einem zylinderförmigen Reaktorgehäuse (1), enthaltend ein nach beiden Seiten offenes Leitrohr (2), dadurch gekennzeichnet, daß durch eine Pumpe (5) über eine Saugleitung (6) und eine Druckleitung (6a) und am Ende dieser sich befindenden Düse (4) ein Kreislaufsystem für die kontinuierliche Substratumwälzung hergestellt ist, die Düse (4) zusätzlich über die Leitung (8a) an den Kompressor (8) zur Versorgung von mit unter Druck stehender Luft oder Luft-Sauerstoffgemischen angeschlossen ist, die Düse (4) durch ringförmige Öffnungen ((23) und (24)) mit der Zuleitung (6), durch einen oder mehrere Ringspalte (22) mit der Zuleitung (8a) verbunden ist und über eine Vormischkammer (25) im Anschluß an diese Öffnungen verfügt, die in ihrem Übergangsbereich zu der eigentlichen Mischkammer (27) eine Düse (26) besitzt, welche an der Leitung (19) anliegt, die Mischkammer so gestaltet ist, daß möglichst geringe Scherkräfte auf die darin passierenden Mikroorganismen und eine möglichst geringe Kontaktzeit dieser mit den Oxidationsmitteln resultieren, und am Ende der Mischkammer sich ein Diffusor (28) anschließt, das Leitrohr (2) mit einem Deflektor (3) versehen ist, wodurch das durch die Düse versprühte Substrat-Luft-Gemenge entlang der äußeren Wandung des Leitrohres (2) mit Deflektor (3) nach oben geleitet wird, um dann entweder wieder durch die Leitung (6) in den Kreislauf zurück gepumpt zu werden oder über eine Leitung (10) in den statischen Abscheider (11) abzufließen, der statische Abscheider (11) über die Pumpe (12), Leitung (13) und Ventil (15) mit dem Reaktor (1) verbunden ist, darüberhinaus über die Pumpe (12) mit einer nach außen führenden Leitung (14) mit Ventil (15) zur Abgabe des Klärschlammes in ein Auffangbecken wobei er noch eine Flüssigkeitsableitung (l6) aufweist, die Pumpe (12) zusammen mit den Ventilen (15) für ein optimales Rücklaufverhältnis sorgt und die Leitung (7a) und Pumpe (7), die an der Leitung (6) installiert sind, die Zufuhr an Substrat entsprechend der durch den Abscheider (11) ausgeschleusten Klärschlamm- und Flüssigkeitsmengen erlauben.

9.) Vorrichtung gemäß Anspruch 8, dadurch gekennzeichnet, daß der Abscheider (11) in seinem Inneren eine Beruhigungszone (30) aufweist, über dieser Beruhigungszone (30) Umlenkelemente (29) aufgebracht sind, in deren Mitte der Ablauf (16) für das geklärte Abwasser eingebaut ist, eine Leitung (10) die zu klärende Flüssigkeit in den Abscheider (11) eingibt, eine Wand der Beruhigungszone (30) zur Umlenkung des Flüssigkeitsstrahls beiträgt, der teilweise sofort von der Pumpe (11) aufgenommen wird und teilweise nach oben steigt, wobei die mitgerissenen Gasblasen nach oben ausgetragen werden, die Umlenkelemente (29) mit dem Ablauf (16) in loser Verbindung stehen, wobei das schlammhaltige Abwasser durch die Einbauten (29) mehrfach umgelenkt und dadurch der Sedimentationsweg verlängert wird; und die Umlenkelemente (29) über der Beruhigungszone (30) so angeordnet sind, daß abgeschiedene Schlammteile im Inneren dieser Zone nach unten sinken können, um dann durch die Pumpe (12) ausgetragen zu werden.

10.) Vorrichtung gemäß Anspruch 8 zur simultanen chemischen und biologischen Beseitigung fester und flüssiger organischer Abfälle mittels eines Schlaufenreaktors bestehend aus einem zylinderförmigen Reaktorgehäuse (1) enthaltend ein nach beiden Seiten offenes Leitrohr (2) mit einem am oberen Ende konisch nach außen verlaufenden und dann wieder zylindrisch werdenden Deflektor (3), dadurch gekennzeichnet, daß im unteren Drittel des Leitrohres zentrisch zu diesem eine Düse (4) untergebracht ist, die Düse (4) an einem Rohr (6a) für Substratzufuhr, einem Rohr (8a) für die Gaszufuhr und einem Rohr (19) für die Oxidationsmittelzufuhr anliegt, im oberen oder mittleren Bereich des Inneren des Leitrohres (2) ein Rohr (6) zur Kreislaufführung des Substrates beginnt, welches über eine Rückführpumpe (5) mittels eines Rohres (6a) mit der Düse (4) verbunden ist, hinter der Pumpe (5) eine Substratzufuhrleitung (7a) mit dem Rohr (6) zusammentrifft, die eine Dosierpumpe (7) aufweist, wodurch eine einspeisbare Kreisleitung zum Umpumpen des Substrats entsteht, die Düse (4) über die Gaszuleitung (8a) mit einem Kompressor (8) und eine in der Düse (4) untergebrachte Düse (26) über die Leitung (19) mit einer Dospierpumpe oder einem Drosselventil (20) zur Dosierung eines Oxidationsmittels verbunden sind, eine Überlaufleitung (10) in einem statischen Abscheider (11) mündet, der Abscheider (11) zum Transport des Dickschlammes über eine Pumpe (12) über die Leitung (13) an den Reaktor und mittels der Leitung (14) mit einem Schlammauffangbecken in Verbindung steht, regulierbare Rücklaufventile in den Leitungen (13) und (14) angebracht sind und der Abscheider (11) einen in seinem oberen Teil angebrachten Ablauf (16) aufweist, die Düse (4) im unteren Drittel des Reaktorinnenraumes angebracht ist und der Reaktor gegebenenfalls eine Eintragsvorrichtung (21) zur Beschickung des Reaktors mit Trockensubstanzen aufweist,
die Düse (4) in ihrem Eingangsbereich einen Ringspalt (22) zur Zuführung der Luft, einen außen gelegenen Ringspalt (23) und eine Zentralbohrung (24) zur Substratzuführung besitzt, woran sich eine Vormischkammer (25) anschließt, die in eine Mischkammer (27) übergeht, wobei kurz vor dem Übergang der Vormischkammer in die Mischkammer die Düse (26) zur Einführung des Oxidationsmittels angebracht und die Mischkammer (27) in ihrem Umfang so ausgelegt ist, daß Flüssigkeitsgeschwindigkeiten von 0,4 bis 5 m sec$^{-1}$ erreicht werden, desweiteren sich an die Mischkammer (27) ein Diffusor (28) anschließt.

**Claims**

1. Process for the simultaneous chemical and biological elimination of solid and liquid organic waste, characterised in that the non-biodegradable products are made bioavailable by oxidation and the bioavailable products are simultaneously biodegraded, whilst maintaining a high microorganism density in the reactor, a high concentration of the products to be degraded, which are present as a solution or suspension in water, intensive gassing with air or air/oxygen mixtures and with the simultaneous addition of an oxidising agent, whilst intensive mixing of the substrate with air or air/oxygen mixtures and a short period of contact with the oxidising agent are required.

2. Process for the further purification of the waste water obtained by the process as claimed in claim 1, characterised in that this waste water is fed into a conventional activation plant, which plant is however treated with the $CO_2$-containing exhaust air which is formed in the reactor in the process as claimed in claim 1, optionally with the admixture of further quantities of $CO_2$.

3. Process as claimed in claim 1, characterised in that in the inside of the reactor a temperature of between 20 and 60°C is established, the chemical oxygen demand or COD value ranges up to 1 000 000 mg COD/litre and the loading per unit of volume in terms of COD is up to 80 g COD/litre.

4. Process as claimed in claim 1, characterised in that the sludge from an existing waste water treatment plant is used as inoculum.

5. Process as claimed in claims 1, 3 and 4, characterised in that substrate dissolved or suspended in water is fed into a reactor (1) by means of a metering pump (7) and is there circulated by means of a pump (5) via a nozzle (4), the air is introduced through an annular gap (22) in the nozzle (4) and the substrate is passed through an annular gap (23) and a central bore (24) in the nozzle (4) so that the air is enclosed between two inherently rounded columns of liquid in order to obtain close contact between these media in the pre-chamber (25), shortly before the pre-chamber (25) merges into the mixing chamber (27) and via a nozzle (26) located therein, the oxidising agent is added, and the mixing chamber (27) is so constructed that it permits a liquid speed of 0.4 to 5 m sec⁻¹, in order to achieve a short contact time with the oxidising agent, the nozzle (4) being accommodated in the lower part of a conduit pipe (2) which is open at both ends, so that after leaving the nozzle as a nozzle jet, the substrate/air mixture is deflected on the base of the reactor and then flows upwards between the inner wall of the reactor and the outer wall of the conduit pipe and some of the medium thus treated is continuously fed into a separator (11) in order to separate the sludge and liquid, and some of the sludge is recycled into the reactor.

6. Process as claimed in claim 5, characterised in that the material (10) discharged from the reactor (1) is fed into a separator (11) the volume of which is of the same order of magnitude as the volume of the reactor, the separation being effected by built-in components, which stabilise the flow and promote gassing, consisting of an annular space (30) in conjunction with deflector elements (29).

7. Process as claimed in claim 1, characterised by the use of ozone, ozone-containing air or hydrogen peroxide, soluble inorganic or organic peroxides, preferably peracetic acid or acetic acid/hydrogen peroxide mixtures, optionally in the presence of catalysts, as oxidising agent.

8. Apparatus for the simultaneous chemical and biological elimination of solid and liquid organic waste by means of a loop reactor, consisting of a cylindrical reactor housing (3), containing a conduit pipe (2) open at both ends, characterised in that by means of a pump (5), via a suction conduit (6) and a pressure conduit (6a) and a nozzle (4) located at the end of these conduits, a circulating system for continuous circulation of substrate is established, the nozzle (4) is additionally connected via the conduit (8a) to the compressor (8) for supplying pressurised air or air/oxygen mixtures, the nozzle (4) is connected by annular openings (23) and (24) to the inlet (6) and is connected by one or more annular gaps (22) to the inlet (8a) and has a premixing chamber (25) adjacent to these openings, this premixing chamber having, in its region of transition into the actual mixing chamber (27), a nozzle (26) which abuts on the conduit (19), the mixing chamber is designed so that the lowest possible shear forces are exerted on the microorganisms contained therein and the shortest possible contact time between these microorganisms and the oxidising agents are obtained, and adjoining the end of the mixing chamber is a diffusor (28), the conduit pipe (2) is provided with a deflector (3), by means of which the mixture of substrate and air sprayed through the nozzle can be conveyed upwards along the outer wall of the conduit pipe (2) with deflector (3), so as to be pumped back either through the conduit (6) into the circuit or to flow away through a conduit (10) into the static separator (11), the static separator (11) is connected to the reactor (1) via the pump (12), conduit (13) and valve (15), and moreover is connected via the pump (12), to a conduit (14) leading outwards with a valve (15) in order to deliver the clarified sludge into a catching tank, whilst it also has a liquid discharge pipe (16), the pump (12) together with the valves (15) ensures an optimum recycling ratio and the conduit (7a) and pump (7) which are installed on the conduit (6) ensure that substrate is supplied in accordance with the quantities of clarified sludge and liquid expelled by the separator (11).

9. Apparatus as claimed in claim 8, characterised in that the separator (11) comprises, in its interior, a stilling zone (30) and above this stilling zone (30) are provided deflection elements (29) in the middle of which is provided the outlet (16) for the clarified waste water, a conduit (10) delivers the liquid which is to be clarified into the separator (11), a wall of the stilling zone (30) helps to deflect the jet of liquid some of which is immediately taken up by the pump (11) and some of which moves upwards, whilst any gas bubbles carried with it are released at the top, the deflector elements (29) are loosely connected to the outlet (16), whilst the waste water which contains sludge is deflected several times by the built-in components (29) and in this way the sedimentation path is lengthened; and the deflection elements (29) are so arranged above the stilling zone (30) that any sludge particles separated off inside this zone are able to sink to the bottom so as to be discharged by the pump (12) .

10. Apparatus as claimed in claim 8 for the simultaneous chemical and biological elimination of solid and liquid organic waste by means of a loop reactor consisting of a cylindrical reactor housing (3) containing a conduit pipe (2) open at both ends with a deflector (3) which extends conically outwards at its upper end and then becomes cylindrical again, characterised in that in the lower third of the conduit pipe, mounted centrally thereto, is a nozzle (4), the nozzle (4) abuts on a pipe (6a) for the supply of substrate, a pipe (8a) for the supply of gas and a pipe (19) for the supply of oxidising agent, and in the upper or middle region of the inside of the conduit pipe (2) is the beginning of a pipe (6) for circulating the substrate, which is connected via a recycling pump (5) and by means of a pipe (6a) to the nozzle (4), behind the pump (5) a substrate supply conduit (7a) meets the pipe (6), this conduit (7a) having a metering pump (7) thus forming a circuit into which substrate can be fed in order to pump the substrate round, the nozzle (4) is connected via the gas supply conduit (8a) to a compressor (8) and a nozzle (26) provided in the nozzle (4) is connected via the line (19) to a metering pump or a throttle valve (20) for metering an oxidising agent, an overflow conduit (10) opens into a static separator (11), the separator (33) for transporting the thickened sludge by means of a pump (12) is connected via the conduit (13) to the reactor and by means of the conduit (14) to a sludge catching tank, regulatable bypass valves are provided in the conduits (13) and (14) and the separator (11) has an outlet (16) provided in its upper part, the nozzle (14) is mounted in the lower third of the interior of the reactor and the reactor optionally has an introduction mechanism (21) for charging the reactor with dry matter, the nozzle (4) has, in its entry area, an annular gap (22) for the introduction of air, an outwardly located annular gap (23) and a central bore (24) for the supply of substrate, and adjoining it is a premixing chamber (25) which merges into a mixing chamber (27), whilst shortly before the premixing chamber merges into the mixing chamber there is provided a nozzle (26) for the introduction of the oxidising agent and the mixing chamber (27) is designed in its circumference so that liquid speeds of 0.4 to 5 m sec⁻¹ are achieved, and furthermore there is a diffuser (28) adjoining the mixing chamber (27).

**Revendications**

1. Procédé pour l'élimination chimique et biologique simultanée de déchets organiques solides et liquides, caractérisé en ce que les produits non biodégradables sont rendus biodisponibles par oxydation et les produits biodisponibles sont biodégradés simultanément, en maintenant dans le réacteur une densité de microorganismes élevée, une concentration élevée des produits à dégrader qui sont présents sous forme de solution ou de suspension dans l'eau, une addition gazeuse intense d'air ou de mélanges air-oxygène et en ajoutant simultanément un oxydant, un mélange intense du substrat avec de l'air ou des mélanges air-oxygène pour un temps de contact court avec l'oxydant étant nécessaire.

2. Procédé de postpurification de l'eau usée qui apparaît après le procédé selon la revendication 1, caractérisé en ce que cette eau usée est envoyée dans une installation classique d'épuration par boues activées, cette installation recevant cependant une addition gazeuse de l'air d'évacuation contenant CO₂ qui apparaît dans le réacteur dans le procédé selon la revendication 1, éventuellement avec mélange d'autres quantités de CO₂.

3. Procédé selon la revendication 1, caractérisé en ce qu'une température comprise entre 20 et 60°C est établie à l'intérieur du réacteur, la demande chimique en oxygène est réglée en tant que valeur de DCO jusqu'à 1 000 000 mg de DCO/litre, la charge spatiale concernant la DCO est réglée jusqu'à 80 g de DCO/litre.

4. Procédé selon la revendication 1, caractérisé en ce que l'on utilise comme inoculum la boue d'une installation de traitement des eaux usées existante.

5. Procédé selon les revendications 1, 3 et 4, caractérisé en ce qu'un substrat dissous ou mis en suspension dans l'eau est introduit dans un réacteur (1) par une pompe doseuse (7) et y est mis en circulation par une buse (4), l'air est conduit par une fente armulaire (22) de la buse (4) et le substrat est conduit par une fente annulaire (23) et un alésage central (24) de la buse (4) de telle façon que l'air est enfermé entre deux colonnes de liquide arrondies pour obtenir un contact étroit de ces milieux dans la préchambre (25), l'oxydalit est introduit peu avant la transition de la préchambre (25) dans la chambre de mélange (27) par une buse (26) qui est située à cet endroit, et la chambre de mélange (27) est agencée de telle façon qu'elle permet une vitesse du liquide de 0,4 à 5 m.s⁻¹ pour atteindre un temps de contact court avec l'oxydant, la buse (4) étant disposée dans la partie inférieure d'un tube de guidage (2) ouvert des deux côtés, de sorte que le mélange substrat-air, après avoir quitté la buse sous forme d'un jet de buse, est dévié au fond du réacteur puis circule vers le haut entre la paroi interne du réacteur et la paroi externe du tube de guidage, et une partie du milieu ainsi traité est conduite en continu à un séparateur (11) pour la séparation de la boue et du liquide, séparateur qui renvoie une partie de la boue dans la circulation du réacteur.

6. Procédé selon la revendication 5, caractérisé en ce que l'écoulement (10) du réacteur (1) est conduit à un séparateur (11) dont le volume est de l'ordre de grandeur du volume du réacteur, la séparation étant réalisée par des éléments tranquillisant l'écoulement et favorisant l'introduction des gaz qui consistent en un espace annulaire (30) en liaison avec des éléments déflecteurs (29).

7. Procédé selon la revendication 1, caractérisé par l'utilisation d'ozone, d'air contenant de l'ozone ou de peroxyde d'hydrogène, de peroxydes organiques ou inorganiques solubles, de préférence d'acide peracétique ou de mélanges acide acétique/peroxyde d'hydrogène, éventuellement en présence de catalyseurs, en tant qu'oxydant.

8. Dispositif pour l'élimination chimique et biologique simultanée de déchets organiques solides et liquides à l'aide d'un réacteur à écoulement en boucle, consistant en une enceinte de réacteur (1) cylindrique contenant un tube de guidage (2) ouvert des deux côtés, caractérisé en ce qu'un système à circulation pour la circulation continue du substrat est produit par une pompe (5) par l'intermédiaire d'une conduite d'aspiration (6) et d'une conduite de refoulement (6a) et d'une buse (4) disposée à l'extrémité de celle-ci, la buse (4) est reliée en outre par l'intermédiaire de la conduite (8a) au compresseur (8) pour l'introduction d'air sous pression ou de mélanges air-oxygène, la buse (4) est reliée à la conduite d'alimentation (6) par des ouvertures annulaires (23) et (24), avec la conduite d'alimentation (8a) par une ou plusieurs fentes annulaires (22) et dispose d'une chambre de prémélange (25) raccordée à ces ouvertures et qui possède dans son domaine de transition avec la chambre de mélange (27) proprement dite une buse (26) qui est située sur la conduite (19), la chambre de mélange est agencée de telle façon qu'il en résulte des forces de cisaillement si possible faibles sur les microorganismes qui passent à l'intérieur et un temps de contact si possible court de ceux-ci avec les oxydants, et un diffuseur (28) se raccorde à l'extrémité de la chambre de mélange, le tube de guidage (2) est muni d'un déflecteur (28) de sorte que le mélange substrat-air distribué par la buse est conduit vers le haut le long de la paroi externe du tube de guidage (2) par le déflecteur (3) pour être ensuite de nouveau pompé dans la circulation par la conduite (6) ou pour s'écouler par l'intermédiaire d'une conduite (10) dans le séparateur statique (11), le séparateur statique (11) est relié au réacteur (1) par la pompe (12), la conduite (13) et la vanne (15), en outre par la pompe (12) avec une conduite (14) conduisant à l'extérieur avec la vanne (15) pour délivrer la boue de curage dans un bassin collecteur, et il présente encore une conduite d'évacuation de liquide (16), la pompe (12) assure en coopération avec les vannes (15) un rapport de circulation optimal et la conduite (7a) et la pompe (7) qui sont installées sur la conduite (6) permettent l'introduction du substrat en fonction des quantités de boue de curage et de liquide produites par le séparateur (11).

9. Dispositif selon la revendication 8, caractérisé en ce que le séparateur (11) présente à l'intérieur une zone de tranquillisation (30), au milieu d'éléments déflecteurs (29) installés au dessus de cette zone de tranquillisation (30) est disposé l'écoulement (16) pour l'eau usée épurée, une conduite (10) amène au séparateur (11) le liquide à épurer, une paroi de la zone de tranquillisation (30) contribue à la déflexion du jet de liquide qui est reçu partiellement immédiatement par la pompe (11) et qui monte partiellement, les bulles de gaz entraînées étant extraites vers le haut, les éléments déflecteurs (29) sont reliés de façon lâche à l'écoulement (16), l'eau usée contenant la boue étant déviée plusieurs fois par les éléments (29) de sorte que le trajet de sédimentation est allongé; et les éléments déflecteurs (29) sont disposés au dessus de la zone de tranquillisation (30) de telle façon que les parties de boue séparées peuvent tomber vers le bas à l'intérieur de cette zone pour être ensuite extraites par la pompe (12).

10. Dispositif selon la revendication 8 pour l'élimination chimique et biologique simultanée de déchets organiques solides et liquides à l'aide d'un réacteur à écoulement en boucle consistant en une enceinte de réacteur (1) cylindrique contenant un tube de guidage (2) ouvert des deux côtés avec un déflecteur (3) s'étendant en cone vers l'extérieur à l'extrémité supérieure puis devenant de nouveau cylindrique, caractérisé en ce que, dans le tiers inférieur du tube de guidage est disposée de façon centrée par rapport à celui-ci une buse (4), la buse (4) est disposée sur un tube (6a) pour l'introduction du substrat, un tube (8a) pour l'introduction du gaz et un tube (19) pour l'introduction de l'oxydant, dans le domaine supérieur ou moyen de l'intérieur du tube de guidage (2) prend naissance un tube (6) pour la circulation du substrat, tube qui est relié à la buse (4) par l'intermédiaire d'une pompe de circulation (5) à l'aide d'un tube (6a), derrière la pompe (5) une conduite (7a) d'introduction du substrat, qui contient une pompe doseuse (7), rejoint le tube (6) de sorte qu'il en résulte une conduite de circulation qui peut être alimentée, pour le pompage en circulation du substrat, la buse (4) est reliée à un compresseur (8) par l'intermédiaire de la conduite (8a) d'alimentation en gaz et une buse (26) disposée dans la buse (4) est reliée par la conduite (19) à une pompe doseuse ou une vanne d'étranglement (20) pour le dosage d'un oxydant, une conduite de trop-plein (10) aboutit dans un séparateur statique (11), le séparateur (11) est en liaison par l'intermédiaire d'une pompe (12), pour le transport de la boue épaisse, avec le réacteur par l'intermédiaire de la conduite (13), et par l'intermédiaire de la conduite (14) avec un bassin collecteur de boue, des vannes de reflux réglables sont disposées dans les conduites (13) et (14) et le séparateur (11) présente un écoulement (16) disposé dans sa partie supérieure, la buse (4) est disposée dans le tiers inférieur de l'espace interne du réacteur et le réacteur présente éventuellement un dispositif d'introduction (21) pour le chargement de substances sèches dans le réacteur, la buse (4) possède dans son domaine d'entrée une fente annulaire (22) pour l'introduction de l'air, une fente annulaire (23) disposée à l'extérieur et un alésage central (24) pour l'introduction du substrat, auquel se raccorde une chambre de prémélange (25) qui conduit à une chambre de mélange (27), la buse (26) pour l'introduction de l'oxydant étant disposée peu avant la transition entre la chambre de prémélange et la chambre de mélange, et la chambre de mélange (27) étant disposée de telle façon dans sa périphérie que des vitesses du liquide de 0,4 à 5 m.s$^{-1}$ sont atteintes, puis un diffuseur (28) se raccorde à la chambre de mélange (27).

Fig. 1

EP 0 278 296 B1

Fig.3

Fig.2

Fig.4